# EUROPÄISCHE PATENTANMELDUNG

(11) **EP 1 918 354 A1**
(43) Veröffentlichungstag der Anmeldung: **07.05.2008**
(21) Anmeldenummer: 06021488.9
(22) Anmeldetag: 13.10.2006
(51) Int. Cl.: C10L 1/02, C10L 1/32, C10L 5/04, C10L 5/40, C10L 9/10

(54) **Brennstoffzubereitungen die Glycerin enthalten**

(71) Anmelder: Cognis Oleochemicals GmbH, 40589 Düsseldorf (DE)
(72) Erfinder: Bähr, Martin Dr., 40764 Langenfield (DE); Westfechtel, Alfred Dr., 40724 Hilden (DE); Nottinger, Klaus, 41570 Neuss (DE); Meinz, Andreas, 47839 Krefeld (DE)
(74) Vertreter: Herzog, Martin

(57) **Zusammenfassung**

Vorgeschlagen werden Brennstoffzubereitungen, welche Brennstoffe und Glycerin enthalten.

## Beschreibung

### Gebiet der Erfindung

Die Erfindung befindet sich auf dem Gebiet der oleochemischen Rohstoffe und betrifft Brennstoffzubereitungen mit einem Zusatz an Glycerin.

### Stand der Technik

Seit dem Beginn der Industrialisierung ist der technische Fortschritt mit der Bereitstellung von Energie und Wärme verbunden. Stand im Anfang im Vordergrund, diese Ressourcen in ausreichenden Mengen und zu niedrigen Preisen herstellen zu können, haben in den letzten beiden Jahrzehnten des vergangenen Jahrhunderts daneben vor allem auch ökologische Aspekte an Bedeutung gewonnen. Hierzu nur zwei Beispiele, die die Bandbreite zwischen nationalen Fragestellungen und Globalisierung in diesem Kontext widerspiegeln:
- Durch den nachgewiesenen Zusammenhang zwischen Feinstaub- bzw. Russpartikelbelastung und Erkrankungen der Atemwege ist Druck auf die Hersteller von Pkw entstanden, Dieselfahrzeuge mit entsprechend wirksamen Partikelfiltern auszurüsten.
- Im Kampf gegen die Erderwärmung spielt die Verringerung der CO₂-Emissionen eine entscheidende Rolle. Durch Zuteilung einer begrenzten Menge an Emissionszertifikaten sollen die Industrien motiviert werden, die Schadstoffmengen freiwillig zu verringern, da ansonsten hohe zusätzliche Kosten entstehen.

Weitere Aspekte betreffend die Verwendung von Brennstoffen, die zwar in großen Mengen und niedrigen Preisen zur Verfügung stehen, jedoch aus unterschiedlichen Gründen nicht für die Gewinnung von Wärme und Strom verwendet werden können. Ein prominentes Beispiel hierfür ist beispielsweise Kohlestaub, der nur in speziell ausgelegten Kraftwerken überhaupt verbrannt werden kann, da dessen Verwendung stets mit der Gefahr einer Feinstaubexplosion verbunden ist. Ein anderes Beispiel betrifft Abfälle, die bei der Herstellung von Polymerfasern anfallen, z.B. kurze und daher wertlose Abschnitte von Polyacrylfasern, die bislang nicht nur nicht verbrannt werden können, sondern im Gegenteil mit hohem finanziellen Aufwand den gesetzlichen Bestimmungen folgend entsorgt werden müssen.

Der vorliegenden Erfindung liegt daher die komplexe Aufgabe zu Grunde, für die Vielzahl der geschilderten Probleme bei der Zurverfügungstellung und Optimierung von Brennstoffen ein einheitliches erfinderisches Konzept anzubieten. Dabei liegt der Schwerpunkt zum einen auf der Verbesserung des Brennwertes und der Brennleistung von konventionellen Rohstoffen, wie beispielsweise Treibstoffen oder Heizölen sowohl für feste als auch mobile Feuerungsanlagen und zum anderen in der Zugänglichmachung von bestimmten Stoffen für die Verbrennung, bei denen dies bislang nicht oder nur unter wenig wirtschaftlichen Bedingungen möglich war, wie etwa Kohlestaub oder Polymerabfällen.

### Beschreibung der Erfindung

Gegenstand der Erfindung sind Zubereitungen, welche Brennstoffe und Glycerin enthalten. Der Zusatz von Glycerin zu Brennstoffen ist mit einer Vielzahl von Vorteilen verbunden und löst insbesondere das komplexe Anforderungsprofil, das eingangs geschildert wurde. Im Einzelnen
- vermindert der Zusatz von Glycerin die Menge an NOX und Kohlenmonoxid bei der Verbrennung insbesondere von fossilen Brennstoffen;
- vermindert der Zusatz von Glycerin die Russ- und Feinstaubbildung, beispielsweise bei der Verbrennung von Dieselkraftstoffen;
- verbessert der Zusatz von Glycerin das Löslichkeitsverhalten bei flüssigen Kraftstoffen,
- erniedrigt der Zusatz von Glycerin die Viskosität und verbessert die Fließeigenschaften, beispielsweise beim Zusatz zu Schiffdiesel;
- verbessert die Mitverwendung von Glycerin die Ökonomie von industriellen Verbrennungsprozessen zur Wärme- und Stromerzeugung, da für Kohlendioxid, das bei der Verbrennung von nachwachsenden Rohstoffen wie Glycerin entsteht, keine Emissionszertifikate erworben werden müssen;
- erlaubt der Zusatz von Glycerin den Einsatz von fein verteilten Brennstoffen, wie z.B. Kohlestaub, durch Befeuchtung oder Bildung eines Slurries, wodurch die Gefahr von Staubexplosionen vermieden wird;
- macht der Zusatz von Glycerin die Verwendung von Abfällen aus der Polymerindustrie möglich, indem beispielsweise Polyacrylatfasern zu Gelen oder stückigen Produkten verarbeitet werden, die problemlos der Verbrennung zugeführt werden können.

Die Mitverwendung von Glycerin bedeutet, dass dem Verbrennungsprozess nicht nur von außen Luft zugeführt wird, sondern dass mit der "3-O-Verbindung" Glycerin auch ein Sauerstoffträger insbesondere in der flüssigen Phase angeboten wird, was die Verbrennung erleichtert und somit auch zu weniger Russbildung führt.

### Brennstoffe

Unter dem generischen Begriff "Brennstoff" ist jedes brennbare vorzugsweise feste oder flüssige Material zu verstehen, das gespeicherte Energie durch Oxidation mit Luftsauerstoff, meist in Form einer Verbrennung, in nutzbare Energie umwandelt. Brennstoffe werden zur Wärmegewinnung eingesetzt, während Kraftstoffe (Treibstoffe) in Verbrennungsmotoren verwendet werden. Diese Definition der Begriffe ist unabhängig von der chemischen Zusammensetzung, so ist 'Heizöl' ein Brennstoff, der unter der Bezeichnung Diesel als Kraftstoff vertrieben wird. Im Sinne der vorliegenden Erfindung werden beide Begriffe im Zweifelsfall synonym verwendet. Weiterhin unterscheidet man natürliche und künstliche Brennstoffe. Natürliche Brennstoffe werden in der Form eingesetzt, in der sie der Umwelt entnommen werden. Künstliche Brennstoffe werden durch einzelne Verfahrensschritte aus den natürlichen Brennstoffen gewonnen. Die Beurteilung der Qualität eines Brennstoffes hinsichtlich seines Vermögens Wärme zu liefern kann durch seinen Heizwert oder durch seinen Brennwert erfolgen. Abhängig ist es davon, inwiefern das im Rauchgas als Dampf enthaltene Wasser energetisch genutzt wird (Brennwertnutzung). Bei Brennstoffen ohne Wasserstoff (gebunden bzw. als Wasser) sind die Werte für Brennwert und Heizwert identisch.

Typische Beispiele für flüssige Brennstoffe sind Kraftstoffe für Otto- oder Dieselmotoren, Kerosin, Schweröle für die Feuerung von Schiffsdieseln, Heizöle sowie Fraktionen, die bei der Erdölraffination anfallen. Typische Beispiele für feste Brennstoffe sind Kohle, Kohlestaub, oder Holz. Der Zusatz von Glycerin zu diesen Brennstoffen hat im Wesentlichen den Vorteil, das Brennverhalten zu verbessern und den Heiz- bzw. Brennwert zu steigern. Im Fall von Kohlestaub wird zudem die Gefahr von Staubexplosionen gebannt.

Ein Sonderfall für die Verwendung als festen Brennstoff stellen Abfälle aus der Polymerindustrie, insbesondere kurze Faserabschnitte dar, die bei der Herstellung von Polyacrylaten anfallen und wirtschaftlich nicht nur nutzlos sind, sondern teuer entsorgt werden müssen. Da die Fasern, die üblicherweise als Superabsorber für Windeln und dergleichen verwendet werden, ein hohes Aufnahmevermögen für Flüssigkeiten aufweisen, saugen sie sich leicht mit Glycerin voll und bilden je nach Faseranteil Gele oder leicht formbare Körper, die problemlos der Verbrennung zugeführt werden können. Anstelle von hohen Kosten für die fachgerechte Entsorgung werden jetzt Gutschriften für die Verbrennungsleistung erhalten. Des Weiteren kommen als Brennstoffe auch Mischlasten für die Müllverbrennung in Betracht, die natürlich in beliebigen Mengen anfallen, zumal die Verbringung von Haushaltsmüll auf Deponien nicht mehr zulässig ist. Die Befeuchtung von diesen Stoffen hat vor allem die Aufgabe die Verbrennung auf den Rosten zu erleichtern. Gerade für diesen Zweck eignet sich dann auch unbehandeltes Glycerin, beispielsweise unmittelbar aus der Herstellung von Biodiesel, da der Wasseranteil die Verbrennung ruhiger ablaufen lässt und selbst der Salzgehalt nicht stört, da er sich anschließend in der Schlacke wieder findet. Weitere Beispiele sowie Angaben zu deren Heiz- und Brennwert sind der folgenden Tabelle 1 zu entnehmen

**Tabelle 1**

| **Heiz- und Brennwerte von flüssigen und festen Brennstoffen** | | |
|---|---|---|
| **Brennstoff** | **Heizwert [MJ/kg]** | **Brennwert [MJ/kg]** |
| Altfett | 36.0 | |
| Paraffin | 45.0 | 49.0 |
| Biodiesel | 37.0 | |
| Diesel | 43.0 | 45.9 |
| Heizöl EL | 42.7 | 45.5 |
| Heizöl L | 42.0 | 44.8 |
| Heizöl M | 40.7 | 43.3 |
| Heizöl S | 40.2 | 42.7 |
| Benzin | 42.5 | |
| Holz | 15.1 | 18.8 |
| Holzpellets | 18.0 | |
| Papier | 15.0 | |
| Torf | 14.7 | 22.6 |
| Braunkohlebriketts | 19.7 | 20.9 |
| Gasflammkohle | 27.2 | 29.3 |
| Gaskohle | 29.3 | 31.0 |
| Fettkohle | 31.0 | 32.2 |
| Anthrazit | 31.0 | 31.8 |
| Koks | 30.1 | 30.5 |

### Glycerin

Glycerin stellt ein Koppelprodukt bei der industriellen Herstellung von Fettsäuren und Fettsäureestern dar, welches bei der Spaltung bzw. Umesterung von natürlichen Fetten und Ölen anfällt und in großen Mengen zur Verfügung steht. Das Rohprodukt hat in der Regel eine rein technische Qualität, was dazu führt, dass sich an die chemische Herstellung in der Regel noch eine aufwendige Reinigung anschließt, bei der die Salze - vor allem Kochsalz - durch Membranverfahren abgetrennt und das Wasser destillativ entfernt wird.

In einer Reihe von Fällen ist es jedoch nicht nur ökonomisch interessant, sondern aus anwendungstechnischen Gründen sogar wünschenswert, dass anstelle des nachgereinigten Glycerins die Rohware, insbesondere wasserhaltige Qualitäten zum Einsatz gelangen, wie sie insbesondere bei der Herstellung von Biotreibstoffen ("Biodiesel") in großen Mengen anfallen, da auf diese Weise die Verbrennung gleichmäßiger erfolgt. Dabei verhindert das Glycerin, dass die Wasserbestandteile bei tiefen Temperaturen ausfrieren und den Motor blockieren. Eine bevorzugte Ausführungsform der vorliegenden Erfindung besteht somit darin, Glycerin einzusetzen, welches Wasser und/oder Salze enthält. Typischerweise enthält das Glycerin danach
(b1) 0,1 bis 15, vorzugsweise 1 bis 10 Gew.-% Wasser,
(b2) 0,1 bis 5, vorzugsweise 1 bis 2 Gew.-% Salze und
(b3) 0,1 bis 1, vorzugsweise 0,5 bis 0,75 Gew.-% weitere organische Bestandteile.

### Zubereitungen

Die erfindungsgemäßen Zubereitungen können
(a) 90,0 bis 99,9, vorzugsweise 91 bis 98 und insbesondere ungefähr 95 Gew.-% Brennstoffe und
(b) 0,1 bis 10,0, vorzugsweise 2 bis 9 und insbesondere ungefähr 5 Gew.-% Glycerin
enthalten.

### Verfahren zur Brennwert- und Brennleistungsverbesserung

Ein weiterer Gegenstand der Erfindung betrifft ein Verfahren zur Verbesserung des Brennwertes und der Brennleistung von flüssigen oder festen Brennstoffen, welches sich dadurch auszeichnet, dass man diesen Glycerin zusetzt und die Zubereitungen anschließend der Verbrennung zuführt. Die Herstellung dieser Zubereitung kann dabei auf sehr unterschiedlichen Wegen erfolgen, was zu unterschiedlichen Ausgestaltungsformen des gleichen erfindungsgemä-ßen Verfahrens führt:
- In einer ersten Ausführungsform wird aus flüssigen Brennstoffen und Glycerin gegebenenfalls unter Mitverwendung eines geeigneten Emulgators eine Emulsion hergestellt und diese in den Verbrennungsraum einbringt. Diese Alternative eignet sich vor allem dann, wenn die fertige Zubereitung über einen längeren Zeitraum bevorratet werden muss, beispielsweise wenn das Glycerin als Zusatz zu Dieseltreibstoff für einen Schiffsantrieb dient oder ein fertiges Kraftstoffgemisch an der Tankstelle gezapft werden soll. In Abhängigkeit von der Natur des flüssigen Brennstoffs und der Wassermenge im Glycerin kann es erforderlich sein, die Homogenität der Mischung durch Zugabe geringer Mengen - beispielsweise 0,1 bis 1 Gew.-% bezogen auf die Mischung - geeigneter Emulgatoren sicherzustellen. Für diesen Zweck eignen sich insbesondere nichtionische Emulgatoren, wie beispielsweise die Folgenden:
   - Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
   - Alkyl- und/oder Alkenyloligoglykoside mit 8 bis 22 Kohlenstoffatomen im Alk(en)ylrest und deren ethoxylierte Analoga;
   - Anlagerungsprodukte von 1 bis 15 Mol Ethylenoxid an Ricinusöl und/oder gehärtetes Ricinusöl;
   - Anlagerungsprodukte von 15 bis 60 Mol Ethylenoxid an Ricinusöl und/oder gehärtetes Ricinusöl;
   - Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
   - Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
   - Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.
   - Mono-, Di- und Trialkylphosphate sowie Mono-, Di- und/oder Tri-PEGalkylphosphate und deren Salze;
   - Wollwachsalkohole;
   - Polysiloxan-Polyalkyl-Polyether-Copolymere bzw. entsprechende Derivate;
   - Block-Copolymere z.B. Polyethylenglycol-30 Dipolyhydroxystearate;
   - Polymeremulgatoren, z.B. Pemulen-Typen (TR-1,TR-2) von Goodrich;
   - Polyalkylenglycole sowie
   - Glycerincarbonat.

### Im Folgenden werden einige bevorzugte Gruppen von Emulgatoren näher erläutert:

*Ethylenoxidanlagerungsprodukte.* Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgerührt wird, entspricht. C_{12/18}-Fettsäuremono- und -diester von Anlagerungsprodukten von Ethylenoxid an Glycerin sind als Rückfettungsmittel für kosmetische Zubereitungen bekannt.

*Alkyl- und*/*oder Alkenyloligoglykoside.* Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

*Partialglyceride.* Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

*Sorbitanester.* Als Sorbitanester kommen Sorbitanmonoisostearat, Sorbitansesquiisostearat, Sorbitan-diisostearat, Sorbitantriisostearat, Sorbitanmonooleat, Sorbitansesquioleat, Sorbitan-dioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesqui-tartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitan-dimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

*Polyglycerinester.* Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® GI 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische. Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen.
- In einer zweiten Ausführungsform des erfindungsgemäßen Verfahrens werden die flüssigen Brennstoffe und das Glycerin mit Hilfe eines Statikmischers homogenisiert und die Mischung dann in den Verbrennungsraum eingebracht. Auf diese Weise werden mögliche Probleme bei der Herstellung homogener Suspensionen bzw. Emulsionen vermieden, da die Vermischung der beiden Komponenten auf mechanischem Wege unmittelbar vor der Verbrennung erfolgt. Alternativ kann man die beiden Komponenten auch getrennt in den Verbrennungsraum einbringen, beispielsweise durch Verdüsen. Auch auf diese Weise wird eine wenigstens annähernd homogene Verteilung von flüssigem Brennstoff und Glycerin gewährleistet, die für eine ruhige Verbrennung nützlich ist. Diese Varianten setzen jedoch die getrennte Lagerung beider Komponenten voraus, weshalb sie sich wahrscheinlich eher für stationäre Verbrennungsanlagen eignen.
- Bei Einsatz von festen Brennstoffen besteht die bevorzugte Ausgestaltungsform des erfindungsgemäßen Verfahrens darin, dass man die Brennstoffe mit dem Glycerin besprüht oder imprägniert und dann in den Verbrennungsraum einbringt. Das Imprägnieren oder Tränken stellt dabei die einfachere Variante dar, da auf diesem Wege wieder lagerungsfähige Endzubereitungen erhalten werden. Soll die Verfeuerung von Hausmüll durch Zugabe von Glycerin unterstützt werden, dann kommt hierfür natürlich eher das Aufbringen beispielsweise durch Beregnen unmittelbar vor dem Befeuern in Frage. Schon eingangs wurde darauf hingewiesen, dass Polymerabfälle, insbesondere die Faserabschnitte aus der Polyacrylatherstellung ebenfalls als Brennstoffe geeignet sind. Hier besteht die bevorzugte Ausgestaltung des erfindungsgemäßen Verfahrens darin, dass man die klein geschnittenen Fasern in Glycerin dispergiert und auf diese Weise - abhängig von der eingesetzten Fasermenge - pumpbare Gele oder leicht duktile Formkörper herstellt und diese in den Verbrennungsraum einbringt.

In allen diesen Ausgestaltungen gilt, dass man den Brennstoffen - bezogen auf deren Gewicht - ungefähr 0,1 bis ungefähr 10 Gew.-% Glycerin zusetzt.

### Gewerbliche Anwendbarkeit

Wie oben erläutert, liegt dem Konzept der Erfindung die Erkenntnis zugrunde, dass der Zusatz von Glycerin zu festen oder flüssigen Brennstoffen in vielfacher Weise förderlich ist, weil er zum einen den Brennwert erhöht, die Verbrennung gleichmäßiger und mit geringerer Schlackenbildung ablaufen lässt und es zum anderen möglich wird, auch solche Brennstoffe zu verfeuern, die bislang nicht oder nur eingeschränkt der Verbrennung zugeführt werden können. Ein weiterer Gegenstand der Erfindung betrifft daher die Verwendung von Glycerin zur Verbesserung von Brennwert und Brennleistung von flüssigen oder festen Brennstoffen. Die Verbrennung kann dabei entweder in festen oder mobilen Verbrennungsanlagen wie beispielsweise Ottomotoren, Dieselmotoren, Schiffsmotoren, Flugzeugmotoren, Kraftwerke oder Müllverbrennungsanlagen erfolgen

## Patentansprüche

1. Brennstoffzubereitungen, enthaltend
(a) Brennstoffe und
(b) Glycerin.

2. Zubereitungen nach Anspruch 1, **dadurch gekennzeichnet, dass** die Brennstoffe flüssig oder fest vorliegen.

3. Zubereitungen nach den Ansprüchen 1 und/oder 2, **dadurch gekennzeichnet, dass** die flüssigen Brennstoffe ausgewählt sind aus der Gruppe, die gebildet wird von Kraftstoffen für Otto- oder Dieselmotoren, Kerosin, Schwerölen für die Feuerung von Schiffsdieseln, Heizölen sowie Fraktionen, die bei der Erdölraffination anfallen.

4. Zubereitungen nach den Ansprüchen 1 und/oder 2, **dadurch gekennzeichnet, dass** die festen Brennstoffe ausgewählt sind aus der Gruppe, die gebildet wird von Kohle, Holz, Polymeren sowie Mischlasten für die Müllverbrennung.

5. Zubereitungen nach Anspruch 4, **dadurch gekennzeichnet, dass** es sich um Kohlestaub oder Abschnitte von Synthesefasern handelt.

6. Zubereitungen nach mindestens einem der Ansprüche 1 bis 5, **dadurch gekennzeichnet, dass** das Glycerin Wasser und/oder Salze enthält.

7. Zubereitungen nach mindestens einem der Ansprüche 1 bis 6, **dadurch gekennzeichnet, dass** das Glycerin
(b1) 0,1 bis 15 Gew.-% Wasser,
(b2) 0,1 bis 5 Gew.-% Salze und
(b3) 0,1 bis 1 Gew.-% weitere organische Bestandteile
enthält.

8. Zubereitungen nach mindestens einem der Ansprüche 1 bis 7, **dadurch gekennzeichnet, dass** die Komponente (b) Roh-Glycerin aus der Biodiesel-Herstellung darstellt.

9. Zubereitungen nach mindestens einem der Ansprüche 1 bis 8, **dadurch gekennzeichnet, dass** sie
(a) 90,0 bis 99,9 Gew.-% Brennstoffe und
(b) 0,1 bis 10,0 Gew.-% Glycerin enthalten.

10. Verfahren zur Verbesserung des Brennwertes und der Brennleistung von flüssigen oder festen Brennstoffen, **dadurch gekennzeichnet, dass** man diesen Glycerin zusetzt und die Zubereitung anschließend der Verbrennung zuführt.

11. Verfahren nach Anspruch 10, **dadurch gekennzeichnet, dass** man aus den flüssigen Brennstoffen und dem Glycerin gegebenenfalls unter Mitverwendung eines geeigneten Emulgators eine Emulsion herstellt und diese in den Verbrennungsraum einbringt.

12. Verfahren nach Anspruch 10, **dadurch gekennzeichnet, dass** man die flüssigen Brennstoffe und das Glycerin mit Hilfe eines Statikmischers homogenisiert und die Mischung in den Verbrennungsraum einbringt.

13. Verfahren nach Anspruch 10, **dadurch gekennzeichnet, dass** man die flüssigen Brennstoffe und das Glycerin getrennt in den Verbrennungsraum einbringt.

14. Verfahren nach Anspruch 10, **dadurch gekennzeichnet, dass** man die festen Brennstoffe mit dem Glycerin besprüht oder imprägniert und dann in den Verbrennungsraum einbringt.

15. Verfahren nach Anspruch 10, **dadurch gekennzeichnet, dass** man aus den festen Brennstoffen und dem Glycerin Gele oder Formkörper herstellt und diese in den Verbrennungsraum einbringt.

16. Verfahren nach mindestens einem der Ansprüche 10 bis 15, **dadurch gekennzeichnet, dass** man den Brennstoffen - bezogen auf deren Gewicht - 0,1 bis 10 Gew.-% Glycerin zusetzt.

17. Verwendung von Glycerin zur Verbesserung von Brennwert und Brennleistung von flüssigen oder festen Brennstoffen.

18. Verwendung nach Anspruch 17, **dadurch gekennzeichnet, dass** der Einsatz des Glycerins zusammen mit den Brennstoffen in festen oder mobilen Verbrennungsanlagen erfolgt.

19. Verwendung nach den Ansprüchen 17 und/oder 18, **dadurch gekennzeichnet, dass** es sich bei den Verbrennungsanlagen um Ottomotoren, Dieselmotoren, Schiffsmotoren, Flugzeugmotoren, Kraftwerke oder Müllverbrennungsanlagen handelt.
